# EUROPÄISCHE PATENTSCHRIFT

(11) **EP 3 871 957 B1**
(45) Veröffentlichungstag und Bekanntmachung des Hinweises auf die Patenterteilung: **06.09.2023**
(21) Anmeldenummer: 20205621.4
(22) Anmeldetag: 04.11.2020
(51) Int. Cl.: B62D 55/12

(54) **RAUPENLAUFWERK**
CATERPILLAR TRACK
TRAIN DE ROULEMENT À CHENILLES

(30) Priorität: 27.02.2020 DE 102020105169
(43) Veröffentlichungstag der Anmeldung: 01.09.2021
(73) Patentinhaber: CLAAS Selbstfahrende Erntemaschinen GmbH, 33428 Harsewinkel (DE)
(72) Erfinder: Uesbeck, Tobias, 48599 Gronau-Epe (DE); Dopheide, Gregor, 33775 Versmold (DE); Fedrau, Anna, 33397 Rietberg (DE)
(74) Vertreter: CLAAS Gruppe

(56) Entgegenhaltungen:
- WO-A1-00/02766
- US-A- 3 451 728
- US-A1- 2006 125 318
- US-B1- 6 176 334

## Beschreibung

Die Erfindung betrifft ein Raupenlaufwerk einer landwirtschaftlichen Arbeitsmaschine gemäß dem Oberbegriff des Anspruchs 1.

Landwirtschaftliche Arbeitsmaschinen, wie beispielsweise Traktoren oder selbstfahrende Erntemaschinen, werden zunehmend mit Raupenlaufwerken ausgestattet, welche eine bessere Übertragung von Zugkräften auf den Untergrund ermöglichen, sodass die Arbeitsmaschinen leichter durch raue oder schlammige Felder bewegt werden können. Raupenlaufwerke besitzen eine hohe Aufstandsfläche, welche beispielsweise ein Raupenband aus einem elastischen Werkstoff wie Gummi aufweisen. Das Raupenlaufwerk umfasst dabei üblicherweise ein Raupenschiff, ein Triebrad, welches beispielsweise formschlüssig ein endloses Raupenband antreibt, vordere und hintere Umlenkräder sowie zwischen diesen befindliche Laufräder.

Hierbei ist das Triebrad entweder als einteiliges Gussteil gefertigt, oder setzt sich aus miteinander verschraubten oder verschweißten Einzelteilen zusammen. Ein derartiges Triebrad offenbart die EP2949552A1. Nachteilig an der Fertigung des Triebrads als Gussteil ist, dass der Herstellprozess, insbesondere die initialen Modellkosten, und die hierfür benötigten Werkzeuge kostenintensiv sind. Ein weiterer Nachteil dieses Herstellungsverfahrens ergibt sich dadurch, dass Änderungen an der Form des Triebrads auf Grund der benötigten Gussformen mit hohem Änderungsaufwand einhergehen. Die Herstellung des Triebrads aus einer Vielzahl von Einzelteilen ist ebenfalls mit einigen Nachteilen verbunden. Das Verbinden der Einzelteile bedarf eines hohen Zeitaufwandes und erzeugt damit hohe Kosten. Die verschweißten oder verschraubten Einzelteile weisen ein hohes Gewicht sowie zwischen den verschweißten Einzelteilen einen inhomogenen Kraftverlauf auf. Ebenfalls sind derartig ausgestaltete Triebräder nur bedingt gestalt- und kraftflussoptimiert. Die Druckschrift WO 00/02766 A1 offenbart ebenfalls ein Raupenlaufwerk mit einem Triebrad.

Es ist deshalb die Aufgabe der vorliegenden Erfindung, die Nachteile des Stands der Technik zu beheben und insbesondere ein Triebrad für ein Raupenlaufwerk einer landwirtschaftlichen Arbeitsmaschine zu schaffen, welches sich durch eine einfache und kostengünstige Bauweise auszeichnet, eine hohe Steifigkeit und Festigkeit aufweist, sowie kraftflussoptimiert ausgestaltet ist.

Diese Aufgabe wird bei einem Raupenlaufwerk nach dem Oberbegriff des Anspruchs 1 durch die Merkmale des kennzeichnenden Teils von Anspruch 1 gelöst.

Die Erfindung hat viele Vorteile. Zunächst einmal lassen sich die einteilig ausgestalteten Radschüsselelemente auf einfache Art und Weise, mit geringem Zeitaufwand sowie kostengünstig mittels eines Umformverfahrens, insbesondere mittels Rolldrücken, Formpressen oder Tiefziehen, herstellen. Die Form und Dimension eines Radschüsselelements, welches mittels eines derartigen Verfahrens fertigbar ist, sind mit geringem Änderungsaufwand und geringen Werkzeugkosten veränderbar. Dementsprechend können die Form und Dimension des Triebrads an verschieden ausgestalte Raupenlaufwerke kostengünstig angepasst werden. Weiterhin bietet eine aus zwei einteiligen Radschüsselelementen ausgebildete Radscheibe, insbesondere gegenüber einer sich aus einer Vielzahl von verschweißten Bauteilen zusammensetzenden Radscheibe, den Vorteil eines optimierten Kraftflusses innerhalb der einteiligen Radschüsselelemente sowie eine Verkürzung und Vereinfachung des Schweißprozesses.

In einer vorteilhaften Ausgestaltung sind das erste und zweite Radschüsselelement am ersten Flansch ortsfest miteinander verbunden, um ein Verdrehen der beiden Radschüsselelemente relativ zueinander zu vermeiden.

In einer vorteilhaften Weiterbildung, sind das erste Radschüsselelement und das zweite Radschüsselelement koaxial zueinander angeordnet, so dass diese dieselbe Rotationsachse besitzen.

In einer vorteilhaften Ausgestaltung können die Grundkörper des ersten und zweiten Radschüsselelements in radialer Richtung im Wesentlichen V-förmig auseinanderlaufen. Hierdurch resultiert der besondere Vorteil, dass die Grundkörper sich beabstandet voneinander erstrecken. Dies ermöglicht eine Befestigung der Streben zwischen dem ersten und zweiten Radschüsselelement.

In einer vorteilhaften Ausgestaltung sind die Streben zwischen dem ersten und dem zweiten Radschüsselelement angeordnet, da die Streben hier auf einfache Art und Weise befestigt werden können.

In einer vorteilhaften Weiterbildung kann sich jeweils ein zweiter Flansch an dem jeweiligen Grundkörper des ersten und zweiten Radschüsselelements radial außenseitig anschließen. Dies ist besonders vorteilhaft, da mittels des zweiten Flansches die der Oberfläche zugeordneten Streben auf einfache Art und Weise befestigt werden können.

In einer vorteilhaften Weiterbildung sind der Grundkörper und der zweite Flansch des jeweiligen Radschüsselelements einteilig ausgebildet, sodass der erste Flansch, der Grundkörper und der zweite Flansch der Radschüsselelemente mittels des Umformverfahrens herstellbar sind.

In einer bevorzugten Ausführungsform kann die Oberfläche zumindest zwei Auflageelemente aufweisen, wobei jeweils ein Auflageelement radial außenseitig an jeweils einem Radschüsselelement angeordnet ist, um das Raupenband entlang der Oberfläche des Triebrads zu führen.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: zeigt eine Seitenansicht eines Raupenlaufwerks;
- Figur 2: zeigt eine schematische Seitenansicht eines Triebrads eines Raupenlaufwerkes einer landwirtschaftlichen Arbeitsmaschine mit einem Gummiraupenband;
- Figur 3: zeigt eine Schnittansicht des Triebrads.

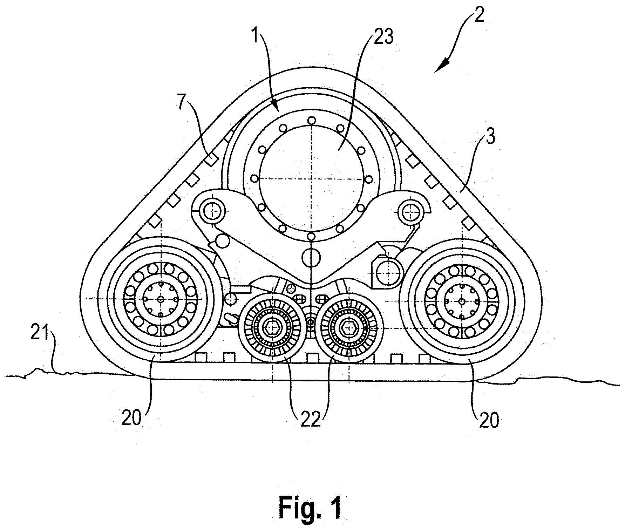

In. Fig. 1 ist ein Raupenlaufwerk 2 einer landwirtschaftlichen Arbeitsmaschine wie einem Traktor (nicht gezeigt) dargestellt. Auf den Aufbau eines Raupenlaufwerks 2 mit einem elastischen Raupenband 3 wird nicht detailliert eingegangen, da dieser dem Fachmann bekannt ist. Eine Arbeitsmaschine im Sinne der Erfindung kann auch eine selbstfahrende Erntemaschine wie ein Mähdrescher oder ein Feldhäcksler sein.

Das Raupenlaufwerk 2 weist zur Abstützung der landwirtschaftlichen Arbeitsmaschine gegenüber dem Boden ein elastisches Raupenband 3, beispielsweise aus Gummi, auf, welches endlos umläuft. Das Raupenband 3 wird dabei durch ein Triebrad 1 angetrieben, in eine Drehbewegung versetzt und läuft über mindestens ein Umlenkrad 20, an welcher das Raupenband 3 umgelenkt wird und die Arbeitsmaschine gegenüber dem Boden 21 abstützbar ist, und Laufräder 22, durch die die Arbeitsmaschine zusätzlich gegenüber dem Boden 21 abstützbar ist.

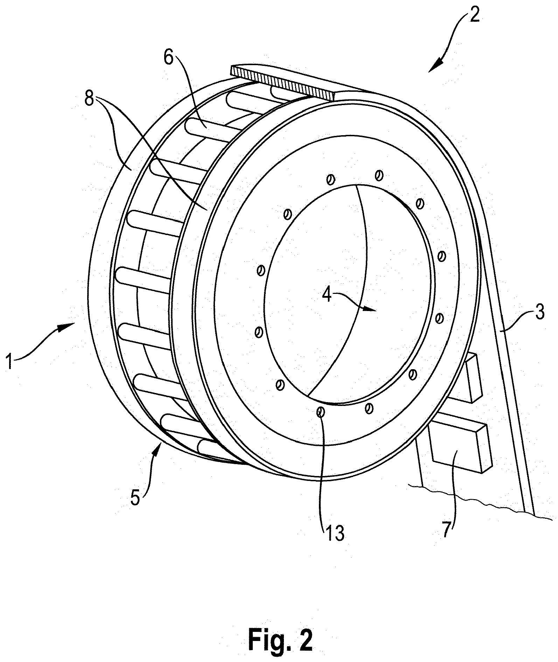

Wie in Fig. 2 dargestellt, umfasst das Triebrad 1 eine noch näher zu erläuternde Radscheibe 4 und eine radial außenseitig der Radscheibe 4 zugeordnete Oberfläche 5. Der Antrieb des Raupenbands 3 erfolgt über eine formschlüssige Verbindung zwischen dem Raupenband 3 und dem Triebrad 1. Hierfür sind radial außenseitig an der Oberfläche 5 des Triebrads 1 eine Vielzahl von in Umfangsrichtung beabstandet angeordnete Streben 6 und am Raupenband 3 innenseitig angeordnete Stollen 7 vorgesehen, die formschlüssig mit den Streben 6 ineinandergreifen. Es sei darauf hingewiesen, dass die Streben 6 alternativ zu der in den Figuren gezeigten Ausführungsform, ebenfalls eine beispielsweise eckige, insbesondere viereckige Form, aufweisen können.

Weiterhin weist die Oberfläche 5 des Triebrads 1 radial außenseitig zwei Auflageelemente 8 auf, auf denen das Raupenband 3 aufliegt und welche eine kraftschlüssige Verbindung mit dem Raupenband 3 bilden und somit zusätzlich zum Antrieb des Raupenbands 3 dienlich sind.

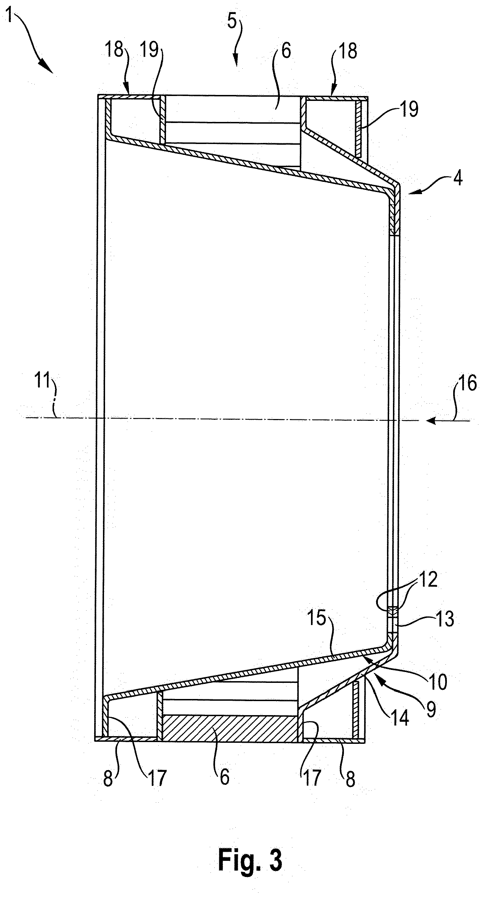

Wie in Fig. 3 dargestellt, umfasst die Radscheibe 4 gemäß der Erfindung ein erstes Radschüsselelement 9 und ein zweites Radschüsselelement 10. Beide Radschüsselelemente 9, 10 weisen jeweils einen sich von einer Drehachse 11 des Triebrads 1 in radialer Richtung erstreckenden ersten Flansch 12 auf. An dem jeweiligen ersten Flansch 12 sind in Umfangsrichtung Bohrungen 13 vorgesehen, mittels derer der erste Flansch 12 des jeweiligen Radschüsselelements 9, 10 und somit das Triebrad 1 auf an sich bekannte Weise über eine der Arbeitsmaschine zugeordnete Radnabe 23 lösbar mit einer Triebachse (nicht gezeigt) des Raupenlaufwerks 2 verschraubt und durch diese antreibbar ist.

An dem jeweiligen ersten Flansch 11 der Radschüsselelemente 9, 10 befindet sich radial außenseitig jeweils ein Grundkörper 14, 15. Der Grundkörper 14 des ersten Radschüsselelements 9 wird im Weiteren als erster Grundkörper 14 und der Grundkörper 15 des zweiten Radschüsselelements 10 als zweiter Grundkörper 15 bezeichnet.

Die Grundkörper 14, 15 erstrecken sich in axialer Richtung 16 der Drehachse 11, wobei der Abstand des jeweiligen Grundkörpers 14, 15 zur Drehachse 11 ansteigt, sodass die Grundkörper 14, 15 jeweils die Form eines Konus aufweisen.

Der jeweilige Grundkörper 14, 15 und der erste Flansch 12 der jeweiligen Radschüsselelemente 9, 10 sind einteilig ausgebildet. Hierdurch wird die Herstellung der Radschüsselelemente 9, 10 mittels eines Drückverfahrens ermöglicht, sodass ein kostengünstiges und schnelles Herstellungsverfahren zur Herstellung der Radschüsselelemente9, 10 anwendbar ist. Die einteilige Ausgestaltung des jeweils ersten Flansches 12 mit dem jeweiligen Grundkörper 14, 15 ermöglicht weiterhin einen optimalen Kraftfluss zwischen selbigen.

Der jeweilige erste Flansch 12 des ersten und zweiten Radschüsselelements9, 10 sind ortsfest miteinander verbunden, beispielsweise verschweißt. Infolge dieser Verbindung wird ein Verdrehen der beiden Radschüsselelemente relativ zueinander vermieden und die Steifigkeit und Festigkeit der Radscheibe 4 zusätzlich erhöht. Das erste und zweite Radschüsselelement 9, 10 sind koaxial zueinander angeordnet, das bedeutet, dass beide Radschüsselelemente 9, 10 rotationssymmetrisch zu der selben Drehachse 11 angeordnet sind. Das erste und zweite Radschüsselelement 9, 10 weisen somit im Wesentlichen die Form zweier, ineinander liegender Schüsseln auf.

In radialer Richtung laufen die Grundkörper 14, 15 der ersten und zweiten Radschüsselelemente 9, 10 im Wesentlichen V-förmig auseinander. Hierbei erstrecken sich beide Grundkörper 14, 15 ausgehend von dem jeweiligen ersten Flansch 12 in einer der Arbeitsmaschine zugewandten axialen Richtung 16, wobei der Abstand zwischen den jeweiligen Grundkörpern 14, 15 relativ zueinander mit zunehmendem Abstand zum ersten Flansch 12 ebenfalls zunimmt. Der zweite Grundkörper 15 des zweiten Radschüsselelements 10 ist hierbei der Drehachse 11 zugewandt und bildet somit den radial innenseitig befindlichen Grundkörper 15, wobei sich der zweite Grundkörper 15 in axialer Richtung 16 über eine längere Strecke als der radial außenseitig befindliche erste Grundkörper 14 erstreckt.

Radial außenseitig schließt sich an dem jeweiligen Grundkörper 14, 15 der Radschüsselelemente 9, 10 jeweils ein zweiter Flansch 17 an. Bezogen auf die Drehachse 11 erstreckt sich dieser zweite Flansch 17 ausgehend von dem diesen zugeordneten Grundkörper 14, 15 jeweils in radialer Richtung. Der jeweilige erste und zweite Grundkörper 14, 15 ist mit dem diesem zugeordneten zweiten Flansch 17 einteilig ausgebildet. Hierdurch können die jeweils aus einem ersten und zweiten Flansch 12, 17 sowie dem Grundkörper 14, 15 bestehenden Radschüsselelemente 9, 10 mittels des Umformverfahrens hergestellt werden.

An dem zweiten Flansch 17 des jeweiligen Radschüsselelements 9, 10 ist radial außenseitig jeweils ein Auflageelement 8 ortsfest angeordnet, beispielsweise verschweißt, welches sich in axialer Richtung 16 erstreckt und eine endlos in Umfangsrichtung des Triebrads 1 umlaufende Lauffläche 18 zum Führen des Raupenbandes 2 ausbildet. Zwischen dem Auflageelement 8 und dem Grundkörper 14, 15 sind zusätzliche Ringscheiben 19 angeordnet und mit selbigen verschweißt, sodass die Steifigkeit des Triebrads 1 erhöht wird

Zwischen dem ersten und zweiten Radschüsselelement 9, 10 sind die Vielzahl von in Umfangsrichtung beabstandet angeordneten Streben 6 angeordnet. Hierbei sind die Streben 6 im dargestellten Ausführungsbeispiel mit dem am ersten Radschüsselelement 9 angeordneten zweiten Flansch 17 sowie mit der an dem zweiten Radschüsselelement 10 angeordneten Ringscheibe 19 ortsfest verbunden, beispielsweise verschweißt.

Es liegt im Rahmen der Erfindung etwaige Aussparungen am zweiten Grundkörper 15 vorzusehen, durch die ein Schmutzabbau zwischen dem ersten und zweiten Grundkörper 14, 15 erfolgen kann.

### Bezugszeichenliste:

- 1: Triebrad
- 2: Raupenlaufwerk
- 3: Raupenband
- 4: Radscheibe
- 5: Oberfläche
- 6: Streben
- 7: Stollen
- 8: Auflageelemente
- 9: Erstes Radschüsselelement
- 10: Zweites Radschüsselelement
- 11: Drehachse
- 12: Erster Flansch
- 13: Bohrungen
- 14: Erster Grundkörper
- 15: Zweiter Grundkörper
- 16: Axiale Richtung
- 17: Zweiter Flansch
- 18: Lauffläche
- 19: Ringscheiben
- 20: Umlenkrad
- 21: Boden
- 22: Laufräder
- 23: Radnabe

## Patentansprüche

1. Raupenlaufwerk (2) einer landwirtschaftlichen Arbeitsmaschine mit einem endlosen Raupenband (3) und einem Triebrad (1) zum Antreiben des Raupenbandes (3), wobei das Triebrad (1) folgendes umfasst:
- eine Radscheibe (4),
- eine der Radscheibe (4) radial außenseitig zugeordnete Oberfläche (5) mit einer Vielzahl von in Umfangsrichtung beabstandet angeordneten Streben (6) für einen mechanischen Eingriff mit dem endlosen Raupenband (3), wobei
die Radscheibe (4) zumindest ein erstes Radschüsselelement (9) und ein zweites Radschüsselelement (10) umfasst,
wobei das erste und zweite Radschüsselelement (9, 10) jeweils aus einem sich von einer Drehachse (11) des Triebrads (1) in radialer Richtung erstreckenden ersten Flansch (12) und einem sich hieran radial außenseitig anschließenden und in axialer Richtung (16) konisch aufweitenden Grundkörper (14, 15) besteht,
wobei der erste Flansch (12) und der Grundkörper (14, 15) einteilig ausgebildet sind, **dadurch gekennzeichnet, dass** das erste und zweite Radschüsselelement (9, 10) die Form zweier, ineinander liegender Schüsseln aufweist, wobei der zweite Grundkörper (15) des zweiten Radschüsselelements (10) hierbei der Drehachse (11) zugewandt ist und somit den radial innenseitig befindlichen Grundkörper (15) bildet, wobei sich der zweite Grundkörper (15) in axialer Richtung (16) über eine längere Strecke als der radial außenseitig befindliche erste Grundkörper (14) erstreckt.

2. Raupenlaufwerk (2) nach Anspruch 1, **dadurch gekennzeichnet, dass** das erste und zweite Radschüsselelement (9, 10) ortsfest an dem ersten Flansch (12) miteinander verbunden sind.

3. Raupenlaufwerk (2) nach einem der Ansprüche 1 bis 2, **dadurch gekennzeichnet, dass** das erste Radschüsselelement (9) und das zweite Radschüsselelement (10) koaxial zueinander angeordnet sind.

4. Raupenlaufwerk (2) nach einem der Ansprüche 1 bis 3, **dadurch gekennzeichnet, dass** die Grundkörper (14, 15) des ersten und zweiten Radschüsselelements (9, 10) in radialer Richtung im Wesentlichen V-förmig auseinanderlaufen.

5. Raupenlaufwerk (2) nach einem der Ansprüche 1 bis 4, **dadurch gekennzeichnet, dass** die Streben (6) radial außenseitig zwischen dem ersten und dem zweiten Radschüsselelement (9, 10) angeordnet sind.

6. Raupenlaufwerk (2) nach einem der Ansprüche 1 bis 5, **dadurch gekennzeichnet, dass** sich jeweils ein zweiter Flansch (17) an dem jeweiligen Grundkörper (14, 15) des ersten und zweiten Radschüsselelements (9, 10) radial außenseitig anschließt.

7. Raupenlaufwerk (2) nach Anspruch 6, **dadurch gekennzeichnet, dass** der Grundkörper (14, 15) und der zweite Flansch (17) des jeweiligen Radschüsselelements (9, 10) einteilig ausgebildet sind.

8. Raupenlaufwerk (2) nach einem der Ansprüche 1 bis 7, **dadurch gekennzeichnet, dass** die Oberfläche (5) zumindest zwei Auflageelemente (8) aufweist, wobei jeweils ein Auflageelement (8) radial außenseitig an jeweils einem Radschüsselelement (9, 10) angeordnet ist.

## Claims

1. A track roller unit (2) of an agricultural working machine, with a continuous track belt (3) and a drive wheel (1) for driving the track belt (3), wherein the drive wheel (1) comprises the following:
- a wheel disk (4),
- a radially outer surface (5) associated with the wheel disk (4), with a plurality of struts (6) for mechanical engagement with the continuous track belt (3) and which are separated from one another in the circumferential direction,
wherein
the wheel disk (4) comprises at least a first wheel dish element (9) and a second wheel dish element (10),
wherein the first and the second wheel dish element (9, 10) respectively consists of a first flange (12) extending in the radial direction from an axis of rotation (11) of the drive wheel (1) and a main body (14, 15) which is radially outwardly adjacent to the first flange and which widens conically in the axial direction (16),
wherein the first flange (12) and the main body (14, 15) are configured as a single piece,
**characterized in that**
the first and the second wheel dish elements (9, 10) are in the shape of two dishes which lie one inside the other, wherein in this regard, the second main body (15) of the second wheel dish element (10) faces the axis of rotation (11) and therefore forms the radially inner main body (15), wherein the second main body (15) extends in the axial direction (16) over a longer distance than the radially outer first main body (14).

2. The track roller unit (2) according to claim 1, **characterized in that** the first and the second wheel dish elements (9, 10) are immovably connected together on the first flange (12).

3. The track roller unit (2) according to one of claims 1 to 2, **characterized in that** the first wheel dish element (9) and the second wheel dish element (10) are disposed coaxially with respect to each other.

4. The track roller unit (2) according to one of claims 1 to 3, **characterized in that** the main body (14, 15) of the first and the second wheel dish elements (9, 10) diverge from each other in the radial direction in a substantially V-shape.

5. The track roller unit (2) according to one of claims 1 to 4, **characterized in that** the struts (6) are disposed radially outwardly between the first and the second wheel dish elements (9, 10).

6. The track roller unit (2) according to one of claims 1 to 5, **characterized in that** a respective radially outer second flange (17) adjoins the respective main body (14, 15) of the first and second wheel dish elements (9, 10).

7. The track roller unit (2) according to claim 6, **characterized in that** the main body (14, 15) and the second flange (17) of the respective wheel dish element (9, 10) are configured as a single piece.

8. The track roller unit (2) according to one of claims 1 to 7, **characterized in that** the surface (5) has at least two support elements (8), wherein a respective support element (8) is disposed radially outwardly on a respective wheel dish element (9, 10).

## Revendications

1. Train de roulement à chenilles (2) d'une machine de travail agricole comprenant une bande de chenille sans fin (3) et une roue motrice (1) pour l'entraînement de la bande de chenille (3), la roue motrice (1) incluant ce qui suit :
- un disque de roue (4),
- une surface (5) associée radialement extérieurement au disque de roue (4), comprenant une pluralité d'entretoises (6) disposées de manière distante dans la direction circonférentielle pour un engrènement mécanique avec la bande de chenille sans fin (3),
le disque de roue (4) incluant au moins un premier élément de voile de roue (9) et un second élément de voile de roue (10),
le premier et le second élément de voile de roue (9, 10) étant constitués respectivement d'une première flasque (12), s'étendant dans la direction radiale à partir d'un axe de rotation (11) de la roue motrice (1), et d'un corps de base (14, 15) s'y raccordant radialement extérieurement et évasé coniquement dans la direction axiale (16),
la première flasque (12) et le corps de base (14, 15) étant conçus d'un seul tenant,
**caractérisé en ce que**
le premier et le second élément de voile de roue (9, 10) présentent la forme de deux voiles logés l'un dans l'autre, le second corps de base (15) du second élément de voile de roue (10) étant ainsi tourné vers l'axe de rotation (11) et formant ainsi le corps de base (15) se trouvant radialement intérieurement, le second corps de base (15) s'étendant dans la direction axiale (16) sur une distance plus longue que le premier corps de base (14) se trouvant radialement extérieurement.

2. Train de roulement à chenilles (2) selon la revendication 1, **caractérisé en ce que** le premier et le second élément de voile de roue (9, 10) sont reliés entre eux en position fixe sur la première flasque (12).

3. Train de roulement à chenilles (2) selon une des revendications 1 à 2, **caractérisé en ce que** le premier élément de voile de roue (9) et le second élément de voile de roue (10) sont disposés coaxialement l'un par rapport à l'autre.

4. Train de roulement à chenilles (2) selon une des revendications 1 à 3, **caractérisé en ce que** les corps de base (14, 15) du premier et du second élément de voile de roue (9, 10) s'écartent l'un de l'autre dans la direction radiale sensiblement en forme de V.

5. Train de roulement à chenilles (2) selon une des revendications 1 à 4, **caractérisé en ce que** les entretoises (6) sont disposées radialement extérieurement entre le premier et le second élément de voile de roue (9, 10).

6. Train de roulement à chenilles (2) selon une des revendications 1 à 5, **caractérisé en ce que** respectivement une seconde flasque (17) se raccorde radialement extérieurement au corps de base respectif (14, 15) du premier et du second élément de voile de roue (9, 10).

7. Train de roulement à chenilles (2) selon la revendication 6, **caractérisé en ce que** le corps de base (14, 15) et la seconde flasque (17) de l'élément de voile de roue respectif (9, 10) sont conçus d'un seul tenant.

8. Train de roulement à chenilles (2) selon une des revendications 1 à 7, **caractérisé en ce que** la surface (5) comporte au moins deux éléments d'appui (8), respectivement un élément d'appui (8) étant disposé radialement extérieurement sur respectivement un élément de voile de roue (9, 10) .
